# FASCICULE DE BREVET EUROPEEN

(11) **EP 0 506 496 B1**
(45) Date de publication et mention de la délivrance du brevet: **21.09.1994**
(21) Numéro de dépôt: 92400310.6
(22) Date de dépôt: 07.02.1992
(51) Int. Cl.: F16C 33/38, F16C 33/44

(54) **Cage à éléments assemblés, notamment pour roulements à haute température de fonctionnement**
Aus zusammengesetzten Teilen hergestellter Käfig, insbesondere für Wälzlager mit hoher Betriebstemperatur
Cage made of assembled elements, especially for roller bearings with high service temperature

(30) Priorité: 29.03.1991 FR 9103858
(43) Date de publication de la demande: 30.09.1992
(73) Titulaire: S.N.R. ROULEMENTS, 74010 Annecy Cédex (FR)
(72) Inventeur: Alff, Denis, F-74000 Annecy (FR)
(74) Mandataire: Ernst-Schonberg, Michel

(56) Documents cités:
- EP-A- 0 304 872
- DE-C- 282 425
- DE-C- 923 583
- FR-A- 756 333
- FR-A- 807 508
- FR-A- 2 562 615
- FR-A- 2 630 171
- GB-A- 1 563 935

## Description

L'invention concerne une cage à éléments assemblés, notamment pour roulements à haute température de fonctionnement, dans laquelle un premier élément porte des séparateurs qui délimitent des alvéoles de réception des corps roulants respectivement pourvus d'une terminaison de montage d'un anneau de retenue et de fermeture axiale des alvéoles.

La publication FR-A-2630171 décrit une cage dans laquelle les terminaisons portées par le premier élément sont engagées par déformation dans des évidements répartis circonférentiellement sur l'anneau de retenue.

La publication FR-A-2562615 décrit une cage dans laquelle le premier élément se déforme par suite de la force exercée par le contact axial des terminaisons sur les corps roulants et facilite l'introduction des corps roulants avant montage de l'anneau de retenue.

Dans les cages du type prédéfini, l'anneau de retenue empêche la déformation de l'élément de cage qui assure la rétention des corps roulants et évite à celui-ci de se dégager des corps roulants sous l'effet de contraintes du contact pendant le fonctionnement du roulement.

Lorsque le roulement doit fonctionner à des températures supérieures à 300° C, le choix est porté sur des matériaux à forte rigidité et dureté possédant des propriétés autolubrifiantes. Ces matériaux sont plus particulièrement adaptés aux éléments à formes simples.

L'invention a donc pour objet une cage à éléments assemblés destinée à être montée dans un roulement, dans lequel les corps roulants sont disposés entre une bague intérieure et une bague extérieure.

L'invention a également pour objet une cage à éléments assemblés, dont le premier élément à séparateurs, est introduit axialement entre les bagues du roulement, les ouvertures des alvéoles étant en face des corps roulants prépositionnés et dans laquelle l'anneau de retenue est en appui sur les dits corps roulants.

L'invention a pour objet une cage à éléments assemblés à matériau composite dont le premier élément est exempt de contraintes de montage et dans laquelle l'anneau de retenue absorbe une grande partie des efforts de flexion exercés sur les séparateurs par les corps roulants lors de leurs passages dans la zone de charge du roulement.

Conformément à l'invention, les terminaisons de montage sont axialement limitées par le bord d'au moins une rainure d'encastrement d'un anneau de retenue dont le bord opposé est axialement décalé par rapport à la face d'appui de l'anneau sur les corps roulants.

La cage ainsi réalisée utilise avantageusement un élément rigide qui possède des propriétés de lubrification et un anneau de retenue de section mince dont le matériau lui permet d'absorber les contraintes et déformations.

La cage conforme à l'invention possède un élément exempt de contraintes qui fait avantageusement application des propriétés de lubrification et de résistance thermique du graphite, sur lequel peut être monté l'anneau de retenue après chauffage et dilatation différentielle des éléments constitutifs.

D'autres caractéristiques et avantages de l'invention apparaîtront à la lecture de la description qui suit en référence au dessin annexé dans lequel :

La figure 1 est une coupe transversale des deux éléments constitutifs de la cage.

La figure 2 est une demi-vue en coupe radiale d'un roulement équipé d'une cage telle que représentée à la figure 1.

La figure 3 est une demi-vue en coupe radiale du roulement représenté à la figure 1 en cours de montage de l'anneau de retenue.

La figure 4 est une demi-vue en coupe radiale partielle du roulement avec une variante de réalisation de la cage qui comporte des alvéoles enveloppantes suivant l'axe du roulement.

La figure 5 décrit une variante de réalisation de la cage dont l'élément de retenue possède des ondulations radiales tangentes aux corps roulants lui conférant une élasticité accrue facilitant le montage.

La figure 6 est une vue en coupe circonférentielle de la cage représentée à la figure 4, prise le long de la ligne VI-VI de la figure 4.

La figure 7 décrit une variante de réalisation de la cage avec deux anneaux de retenue.

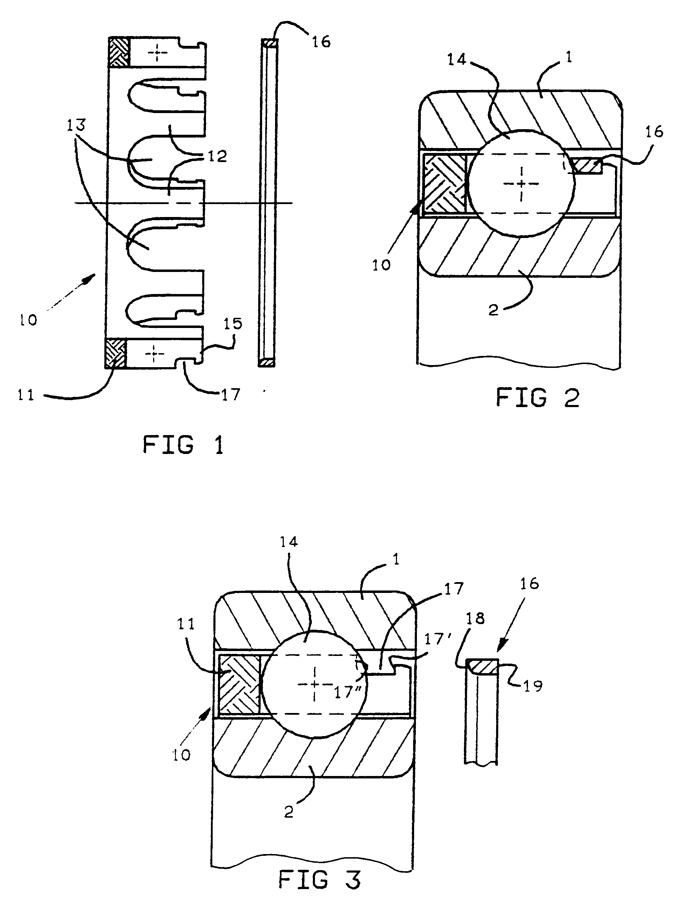

Selon la figure 1, la cage conforme à l'invention est constituée par un premier élément 10 formé par une base annulaire 11 à partir de laquelle s'étendent axialement des séparateurs 12 qui délimitent des alvéoles 13 pour les corps roulants 14 et par un anneau de retenue 16 qui ferme les alvéoles 13.

Les séparateurs 12 portent respectivement une terminaison de montage 15 de l'anneau de retenue 16.

Selon la figure 3, l'anneau 16 sera monté dans une rainure 17 d'encastrement portée par chaque terminaison 15. A cet effet, celle-ci est axialement limitée par un bord 17′ de la rainure. Le bord opposé 17˝ de la rainure est axialement décalé par rapport à la face d'appui de l'anneau 16 sur les corps roulants 14.

La figure 3 montre le roulement en cours d'assemblage de la cage. Le premier élément 10 est préalablement monté sur les corps roulants 14 disposés entre la bague extérieure 1 et intérieure 2. Les bagues 1 et 2 possèdent accessoirement des portées additionnelles assurant le centrage des éléments de la cage lors du fonctionnement.

Dans le but de faciliter le montage de l'anneau de retenue 16, ce dernier porte un chanfrein 18 tangent aux corps roulants 14 et peut être fendu pour être monté à la manière d'un anneau d'arrêt élastique. L'anneau de retenue 16 est monté dans la gorge 17 à force ou par dilatation différentielle. La face 19 de l'anneau opposée au chanfrein 10 vient de la sorte en appui sur le bord 17′ de la gorge.

Au cours du fonctionnement du roulement, les corps roulants 14 viennent indifféremment en appui sur le fond des alvéoles ou sur l'anneau de retenue.

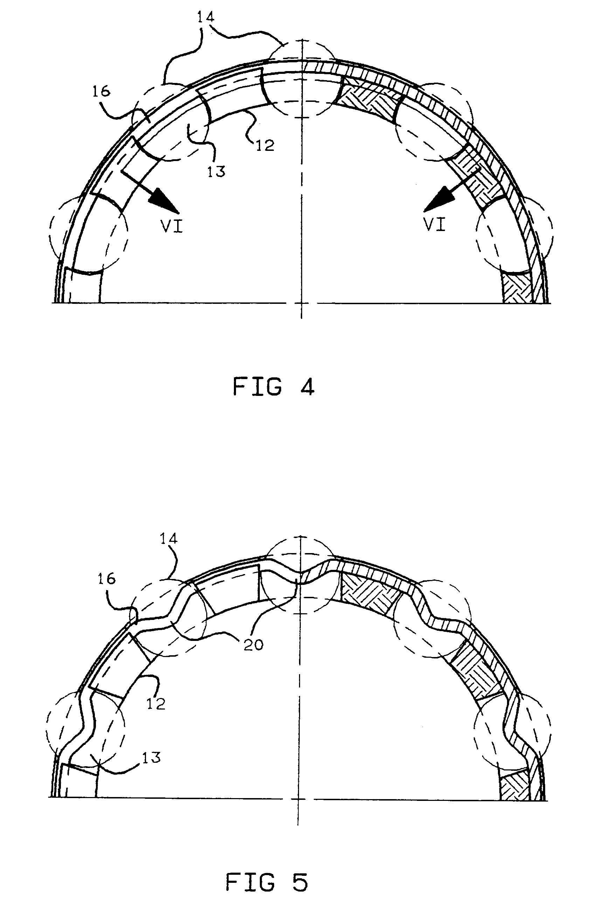

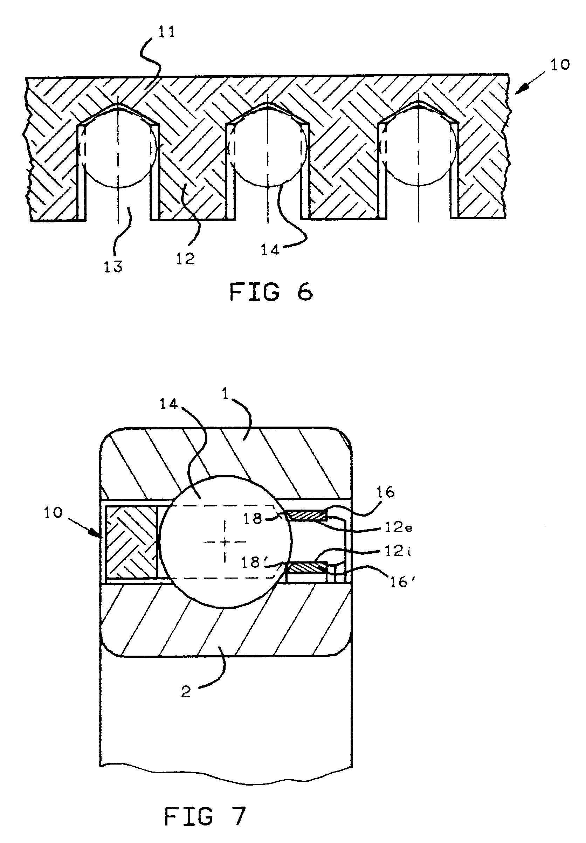

Les figures 4 et 6 se rapportent à une variante de réalisation de la cage selon laquelle les alvéoles 13 possèdent des bords enveloppant partiellement les corps roulants 14 suivant l'axe du roulement.

La figure 5 se rapporte à une variante de réalisation de l'anneau de retenu selon laquelle la partie circonférentielle porte des ondulations radiales 20 en appui sur les corps roulants. Il en résulte une plus grande surface de contact, des pressions de contact réduites ainsi qu'une élasticité accrue de l'anneau qui facilite l'assemblage de la cage 10.

La figure 7 montre une variante de réalisation de la cage montée dans un roulement. Suivant ce mode de réalisation, une rainure telle que 17 permet l'encastrement de l'anneau de retenue et s'étend à la surface extérieure 12e et intérieure 12i pour la réception de deux anneaux de retenue 16, 16′ fonctionnellement semblables qui possèdent des chanfreins 18, 18′ en contact avec les corps roulants 14. Ces deux anneaux peuvent être montés avec un serrage sur la cage 10 de manière à compenser les déformations pouvant être induites. Les séparateurs 12 ne sont alors soumis qu'à des contraintes de compression entre les deux anneaux. Cela permet en outre de compenser les éventuelles différences de dilatation entre les éléments. Les contraintes de pression axiales entre les corps roulants et la cage sont dans ce cas absorbées par l'ensemble des anneaux 16, 16′.

Les divers exemples de réalisation de la cage peuvent faire avantageusement appel à des anneaux de retenue munis d'une fente radiale dans le but de leur conférer une élasticité supplémentaire favorable au montage sur l'élément 10.

Lorsque le roulement fonctionne à des températures élevées supérieures à 300° C et pouvant atteindre 1000°avec certaines céramiques techniques telles que le nitrure de silicium (Si₃N₄), il s'est avéré avantageux de choisir les matériaux constitutifs de la cage parmi ceux qui offrent une résistance suffisante à la chaleur. A cet effet l'élément 10 à séparateurs est réalisé en un matériau à base de graphite ou en un matériau céramique avec des additifs ou des charges tels que le nitrure de bore (NB) qui confèrent à l'élément 10 les propriétés lubrifiantes souhaitées.

L'anneau de retenue 16 est réalisé en un alliage métallique particulièrement résistant aux hautes températures. En outre un revêtement protecteur contre l'oxydation tel que le chrome ou un dépôt céramique peut-être envisagé pour conférer à l'anneau une résistance accrue à l'usure et des propriétés antifriction favorables au cours du fonctionnement du roulement.

## Revendications

1. Cage à éléments assemblés, notamment pour roulements à haute température de fonctionnement dans laquelle un premier élément (10) porte des séparateurs (12) qui délimitent des alvéoles (13) de réception des corps roulants (14) respectivement pourvus d'une terminaison (15) de montage d'un anneau (16, 16′) de retenue et de fermeture des alvéoles, caractérisée par le fait que les terminaisons (15) de montage sont axialement limitées par le bord d'au moins une rainure (17) d'encastrement d'un anneau de retenue (16, 16′) dont le bord opposé (17˝) est axialement décalé par rapport à la face d'appui de l'anneau (16, 16′) sur les corps roulants.

2. Cage selon la revendication 1, caractérisée par le fait qu'une rainure (17) d'encastrement s'étend à la surface extérieure (12e) et intérieure (12i) des séparateurs (12) pour la réception de deux anneaux de retenue (16, 16′).

3. Cage selon la revendication 1 ou 2, caractérisée par le fait, que l'anneau de retenue (16, 16′) est fendu.

4. Cage selon l'une quelconque des revendications 1 à 3, caractérisée par le fait que l'une des faces de l'anneau de retenue comporte un chanfrein (18, 18′) de montage tangent aux corps roulants (14).

5. Cage selon l'une quelconque des revendications 1 à 4, caractérisée par le fait que la partie circonférentielle de l'anneau de retenue porte des ondulations radiales (20) en appui sur les corps roulants.

6. Cage selon l'une quelconque des revendications 1 à 5, caractérisé par le fait que l'élément à séparateurs (12) est réalisé en un matériau à base de graphite.

7. Cage selon l'une quelconque des revendications 1 à 5, caractérisée par le fait que l'élément à séparateurs (12) est réalisé en un matériau céramique avec des additifs ou charges à propriétés lubrifiantes.

8. Cage selon l'une quelconque des revendications 1 à 7, caractérisée par le fait que l'anneau de retenue est réalisé en un alliage métallique possédant un revêtement antifriction et résistant à l'usure tout en le protégeant de l'oxydation.

## Patentansprüche

1. Aus zusammengesetzten Teilen hergestellter Käfig, insbesondere für Wälzlager mit hoher Betriebstemperatur, bei dem ein erstes Teil (10) Trennstücke (12) trägt, die Lagerstellen (13) zur Aufnahme von Wälzkörpern (14) begrenzen und die mit entsprechenden Endstücken (15) zur Aufnahme eines Halte- und Verschlußringes (16, 16′) für die Lagerstellen versehen sind, dadurch gekennzeichnet, daß die Endstücke (15) axial begrenzt werden durch den Rand wenigstens einer Nut (17) zum Einsetzen eines Halteringes (16, 16′), dessen gegenüberliegender Rand (17˝) bezüglich der Stützfläche des Ringes (16, 16′) auf den Wälzkörpern axial verschoben ist.

2. Käfig nach Anspruch 1, dadurch gekennzeichnet, daß sich die Einsetznut (17) entlang der Außenfläche (12e) und der Innenfläche (12i) der Trennstücke (12) erstreckt, zur Aufnahme der beiden Halteringe (16, 16′).

3. Käfig nach Anspruch 1 oder 2, dadurch gekennzeichnet, daß der Haltering (16, 16′) geschlitzt ist.

4. Käfig nach einem der Ansprüche 1 bis 3, dadurch gekennzeichnet, daß eine der Flächen des Halteringes mit einer Montageabschrägung (18, 18′) versehen ist, die tangential zu den Wälzkörpern (14) läuft.

5. Käfig nach einem der Ansprüche 1 bis 4, dadurch gekennzeichnet, daß der Umfangsabschnitt des Halteringes radiale Wellen (20) aufweist, die sich auf den Wälzkörpern abstützen.

6. Käfig nach einem der Ansprüche 1 bis 5, dadurch gekennzeichnet, daß das mit den Trennstücken (12) versehene Teil aus einem Material auf Basis von Graphit besteht.

7. Käfig nach einem der Ansprüche 1 bis 5, dadurch gekennzeichnet, daß das mit den Trennstücken (12) versehene Teil aus einem keramischen Material besteht, das Zusätze oder Zuschläge mit Schmiereigenschaften aufweist.

8. Käfig nach einem der Ansprüche 1 bis 7, dadurch gekennzeichnet, daß der Haltering aus einer Metallegierung besteht, die einen Antireibbelag aufweist, der die Abnutzung bei gleichzeitigem Schutz gegen Oxidation herabsetzt.

## Claims

1. A cage made up of assembled elements, in particular for rolling bearings with a high operating temperature in which a first element (10) carries separators (12) which define cavities (13) for receiving the rolling bodies (14) rspectively provided with a mounting termination (15) for a retaining and cavity-closure ring (16, 16′), characterised in that the mounting terminations (15) are axially limited by the edge of at least one engagement groove (17) for a retaining ring (16, 16′), of which the opposite edge (17˝) is axially displaced with respect to the bearing surface of the ring (16, 16′) at which it bears against the rolling bodies.

2. A cage according to claim 1 characterised in that an engagement groove (17) extends at the outer surface (12e) and the inner surface (12i) of the separators (12) for receiving two retaining rings (16, 16′).

3. A cage according to claim 1 or claim 2 characterised in that the retaining ring (16, 16′) is slit.

4. A cage according to any one of claims 1 to 3 characterised in that one of the faces of the retaining ring comprises a mounting chamfer (18, 18′) which is tangential to the rolling bodies (14).

5. A cage according to any one of claims 1 to 4 characterised in that the circumferential part of the retaining ring bears radial undulations (20) bearing against the rolling bodies.

6. A cage according to any one of claims 1 to 5 characterised in that the element with separators (12) is made of a graphite-base material.

7. A cage according to any one of claims 1 to 5 characterised in that the element with separators (12) is made of a ceramic material with additives or fillers with lubricating properties.

8. A cage according to any one of claims 1 to 7 characterised in that the retaining ring is made of a metal alloy having an anti-friction and wear-resistant coating which also protects it from oxidation.
